# EUROPÄISCHE PATENTSCHRIFT

(11) **EP 2 154 392 B1**
(45) Veröffentlichungstag und Bekanntmachung des Hinweises auf die Patenterteilung: **16.03.2011**
(21) Anmeldenummer: 09008663.8
(22) Anmeldetag: 02.07.2009
(51) Int. Cl.: F16F 13/26, F16F 13/10

(54) **Trennwand für ein umschaltbares, hydraulisch dämpfendes Gummilager**
Partition for a switchable, hydraulically dampened rubber bearing
Paroi de séparation pour un palier en caoutchouc commutable, à amortissement hydraulique

(30) Priorität: 15.08.2008 DE 102008037897
(43) Veröffentlichungstag der Anmeldung: 17.02.2010
(73) Patentinhaber: Firma Carl Freudenberg, 69469 Weinheim (DE)
(72) Erfinder: Beckmann, Wolfgang, 64289 Darmstadt (DE); Sommer, Eberhardt, 69483 Waldmichelbach (DE)

(56) Entgegenhaltungen:
- EP-A- 1 099 875
- DE-A1- 19 807 868
- US-A1- 2007 138 718

## Beschreibung

### Technisches Gebiet

Die Erfindung befasst sich mit einer Trennwand für ein umschaltbares hydraulisch dämpfendes Gummilager mit einem elastomeren Federkörper und zwei Räumen für die Druckflüssigkeit, einem Arbeitsraum und einem Ausgleichsraum, wobei die beiden Räume durch die Trennwand getrennt sind, welche eine Düsenscheibe und eine von einem scheibenartigen, mit Durchlässen versehenen Klemmelement überdeckte und auf der Düsenscheibe aufliegende Membran aufweist wobei die Räume über eine von einem Stellglied verschließbare Durchtrittsöffnung sowie einen Dämpfungskanal hydraulisch miteinander kommunizieren.

Trennwände dieser Art werden bei hydraulisch dämpfenden Gummilagern eingesetzt. Bei Gummilagern dieser Art ist ein Traglager und ein Auflager für die Aufnahme der Traglast vorhanden, die durch einen elastomeren Federkörper miteinander verbunden sind. Im Inneren des Lagers sind zwei Räume für die Druckflüssigkeit vorhanden, und zwar ein Arbeitsraum und ein Ausgleichsraum. Die beiden Räume sind durch eine Trennwand getrennt. Die Trennwand ist mit einem Dämpfungskanal versehen, der hydraulisch die beiden Räume miteinander verbindet. Dieser Dämpfungskanal dient zur Dämpfung von tieffrequenten, großamplitudigen Schwingungen. Außerdem ist in der Mitte der Trennwand eine über ein Stellglied verschließbare Durchtrittsöffnung vorhanden, die geöffnet zur Tilgung von leerlaufbedingten Schwingungen dient. Außerdem ist in der Trennwand eine Membran eingefügt, welche zur Dämpfung von hochfrequenten, kleinamplitudigen Schwingungen dient.

### Stand der Technik

Eine hydraulisch dämpfendes Lager der hier in Frage stehenden Art ist in der DE 198 07 868 C2 dargestellt. Ein solches Lager ist für vielseitige Zwecke, insbesondere bei Kraftfahrzeugen, einsetzbar.

### Darstellung der Erfindung

Der Erfindung liegt die Aufgabe zugrunde, eine Trennwand für ein umschaltbares, hydraulisch schaltbares Gummilager zu schaffen, die möglichst einfach in ihrem Aufbau ist und die auf einfache Weise ein Festklemmen der Membran an der Düsenscheibe ermöglicht.

Die Lösung der gestellten Aufgabe wird bei einer Trennwand der eingangs genannten Art dadurch erreicht, dass das Klemmelement an seinem Außenrand mit Spiel formschlüssig von der Düsenscheibe gehalten ist und an seinem Innenrand von an einem auf einen Außenring der Düsenscheibe aufsteckbaren Steckring vorhandenen Auslegern an die Düsenscheibe drückbar ist. In den Unteransprüchen 2 bis 14 sind vorteilhafte Ausgestaltungen des Anmeldungsgegenstands dargestellt.

Die am Steckring vorhandenen Ausleger stellen Federelemente dar, welche bei entkoppeltem Schaltlager mit ihren radial innen liegenden Anschlägen das Klemmelement gegen die Membran drücken und dadurch die Membran an der Düsenscheibe festklemmen.

Das Klemmelement wird von der Düsenscheibe gehalten. Hierfür hat die Düsenscheibe an ihrem Außenrand radial nach innen weisende Haken, deren Nasen mit Spiel auf den Außenrand des Klemmelements greifen. Das Klemmelement selbst hat an seinem Außenrand Einbuchtungen als Durchlässe für die Haken der Düsenscheibe. Auf den Außenring der Düsenscheibe ist der Steckring aufgesetzt. Der Steckring selbst ist mit mehreren nach innen gerichteten federnd ausgebildeten Auslegern versehen, die mit ihren vorstehenden Nasen an den Innenring des Klemmelements anliegen. Zur Bildung des Dämpfungskanals wirken die Düsenscheibe und der Steckring zusammen. Hierfür ist der Außenrand der Düsenscheibe und die Innenseite des Steckrings mit ringnutförmigen Ausnehmungen versehen, welche den Dämpfungskanal bilden. Dabei hat der Steckring auf seiner Unterseite einen Teil der innen liegenden Kanalwand bildenden Ringansatz. Der Steckring selbst ist aus Kunststoff hergestellt. Auf seiner Außenseite hat der Steckring einen umlaufenden Flansch, der von einem Kragen der Düsenscheibe umfasst ist. Das Klemmelement ist mit einem in die zentrale Durchtrittsöffnung der Trennwand mit Spiel eingesetzten Stutzen versehen. Dieser Stutzen steht geringfügig über die untere Fläche an der Durchtrittsöffnung der Düsenscheibe hervor, so dass das Stellglied am Stutzen beim Schließvorgang der Durchtrittsöffnung zur Anlage kommt. Das Klemmelement selbst ist aus einem Leichtmetall hergestellt.

### Kurzbeschreibung der Zeichnung

Anhand eines in der Zeichnung dargestellten Ausführungsbeispiels wird die Erfindung nachstehend näher erläutert.

Es zeigt:
- Fig. 1: einen Schnitt durch ein Gummilager gemäß einer ersten Ausführungsform,
- Fig. 2: eine Draufsicht auf die Trennwand,

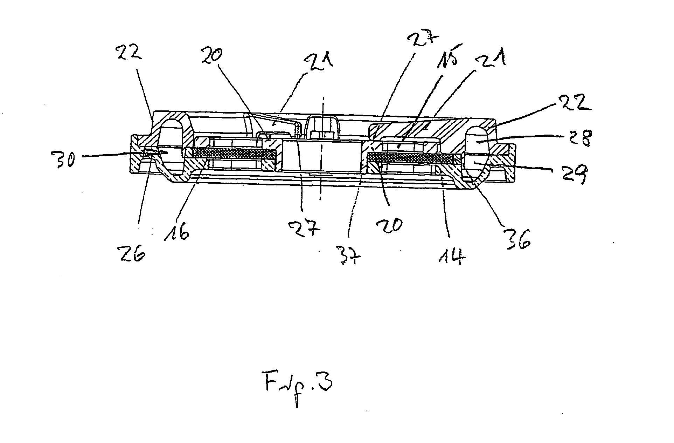

- Fig. 3: einen Schnitt durch die Trennwand gemäß der Linie A-A,
- Fig. 4: einen Schnitt durch die Trennwand gemäß der Linie B-B und
- Fig. 5: einen Schnitt durch ein Lager gemäß einer weiteren Ausführungsform.

### Ausführung der Erfindung

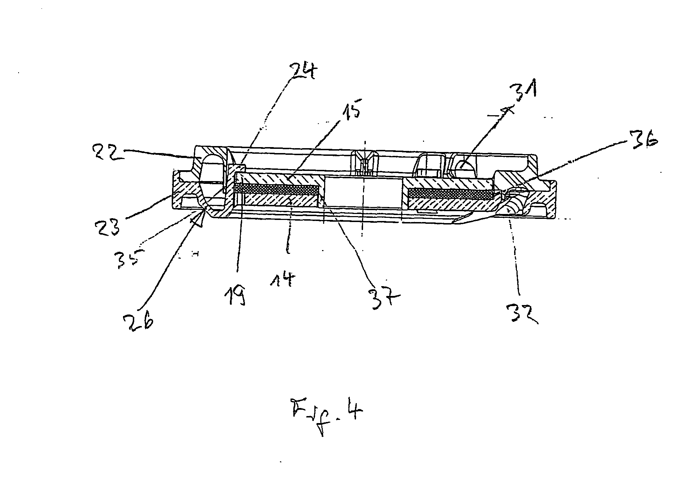

Das in den Figuren gezeigte Gummilager 1 ist ein hydraulisch dämpfendes, umschaltbares Lager. In seinem wesentlichen Aufbau besteht es aus dem Tragkörper 2 und dem Auflager 3. Tragkörper 2 und Auflager 3 sind durch den aus einem Elastomer bestehenden Federkörper 4 von konischer Form miteinander verbunden. In den im Lager 1 befindlichen Räumen 5 und 6 ist eine Druckflüssigkeit enthalten, welche zur Dämpfung von Schwingungen heran gezogen wird. Dabei handelt es sich bei dem Raum 5 um den Arbeitsraum und bei dem Raum 6 um den Ausgleichsraum. Die beiden Räume 5 und 6 sind durch die Trennwand 7 voneinander getrennt. Auf der Oberseite ist der Arbeitsraum 5 durch den Tragkörper 2 zusammen mit dem Federkörper 4 umschlossen. Der Ausgleichsraum 6 wird auf seiner Unterseite von der Rollmembran 8 eingefasst. Die Rollmembran 8 wird mittig von dem Kolben 9 gehalten, der seinerseits mit der Elastomerfeder 10 verbunden ist. Der Raum zwischen der Rollmembran 8 und der Elastomerfeder 10 ist über Öffnungen 11 entlüftet. Die Bewegung des Kolbens 9 erfolgt über einen Unterdruckluftanschluss 12. Durch Anlegen von Unterdruck über den Unterdruckanschluss 12 wird der Kolben 9 entgegen dem Federdruck der Feder 10 nach unten gedrückt und öffnet die Durchtrittsöffnung 13 in der Trennwand 7. Durch Belüften über den Unterdruckanschluss 12 wird durch den Federdruck der Feder 10 der Kolben 9 nach oben gedrückt und verschließt in seiner oberen Lage die Durchtrittsöffnung 13 in der Trennwand 7. Die Trennwand 7 besteht aus der Düsenscheibe 14, dem Klemmelement 15 und der Membran 16. Die Düsenscheibe 14 und das Klemmelement 15 sind mit Durchlässen 17 und 18 versehen, die übereinander liegen. Das Klemmelement 15 ist mit seinem Außenrand 19 (siehe Fig. 4) mit Spiel formschlüssig von der Düsenscheibe gehalten. Der Innenrand 20 wird von den Auslegern 21 in Richtung auf die Düsenscheibe 14 gedrückt. Die Ausleger 21 sind an dem Steckring 22 angebracht, der auf den Außenring 23 der Düsenscheibe 14 aufgesteckt ist.

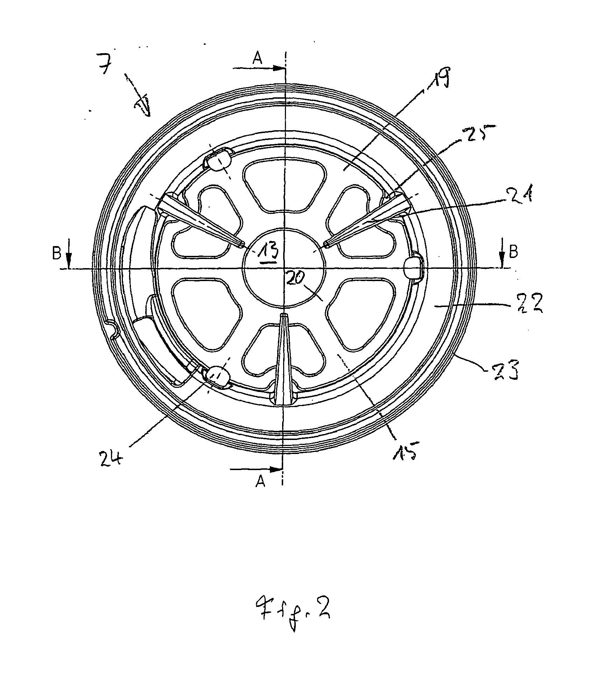

In der Draufsicht auf die Trennwand 7 nach der Figur 2 ist der Steckring 22 mit drei Auslegern 21 sichtbar. Das Klemmelement 15 wird am Außenrand 19 durch die an der Düsenscheibe 14 angebrachten Haken 24 gehalten. Hierfür hat das Klemmelement 15 an seinem Außenrand 19 die Einbuchtungen 25 als Durchlässe für die Haken 24. Auf den Außenrand 26 der Düsenscheibe 14 ist der Steckring 22 aufgesetzt. An diesem Steckring 22 sind die nach innen gerichteten, federnd ausgebildeten Ausleger 21 vorhanden. Diese Ausleger 21 sind mit den vorstehenden Nasen 27 ausgestattet, die am Innenrand 20 des Klemmelements 15 anliegen.

Der Außenrand 26 der Düsenscheibe 14 und der Steckring 22 sind mit den ringnutförmigen Ausnehmungen 28, 29 versehen, die den Dämpfungskanal 30 bilden, welcher die beiden Arbeitsräume 5 und 6 miteinander verbindet. Hierfür ist der Dämpfungskanal 30 mit den Ein- bzw. Auslässen 31, 32 versehen. Der Steckring 22 ist auf seiner Unterseite mit dem umlaufenden Flansch 35 versehen, der von einem Kragen 36 der Düsenscheibe 14 umfasst wird. Das Klemmelement 15 hat einen Stutzen 37, der mit Spiel in die Durchtrittsöffnung 13 eingesetzt ist. Dieser Stutzen 37 steht geringfügig über die untere Ebene der Durchtrittsöffnung 13 der Düsenscheibe hervor. Hierdurch kann der Kolben 9 das Klemmelement 15 entgegen dem Federdruck aus den Auslegern 21 anheben und dadurch die Membran 16 freigeben. Bei dem erfindungsgemäßen Lager ist es günstig, wenn der Steckring aus einem Kunststoff hergestellt wird und das Klemmelement selbst aus einem Leichtmetall.

Bei entkoppeltem Lager, wenn die Durchtrittsöffnung 13 geöffnet ist, drücken die Ausleger 21 das Klemmelement 15 in Richtung auf die Düsenscheibe 14 und die Membran 16 wird festgeklemmt. Beim Schließen der Durchtrittsöffnung 13 durch den Kolben 9 wird der Stutzens 37 und damit das Klemmelement 15 nach oben gedrückt und die Membran 16 freigegeben. Der Dämpfungskanal 30 und die Membran 16 erfüllen dann die Dämpfung der Schwingungen.

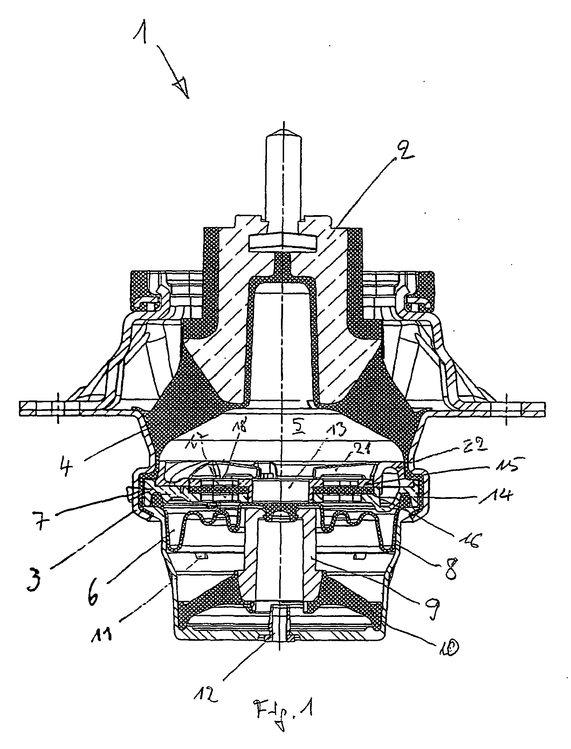

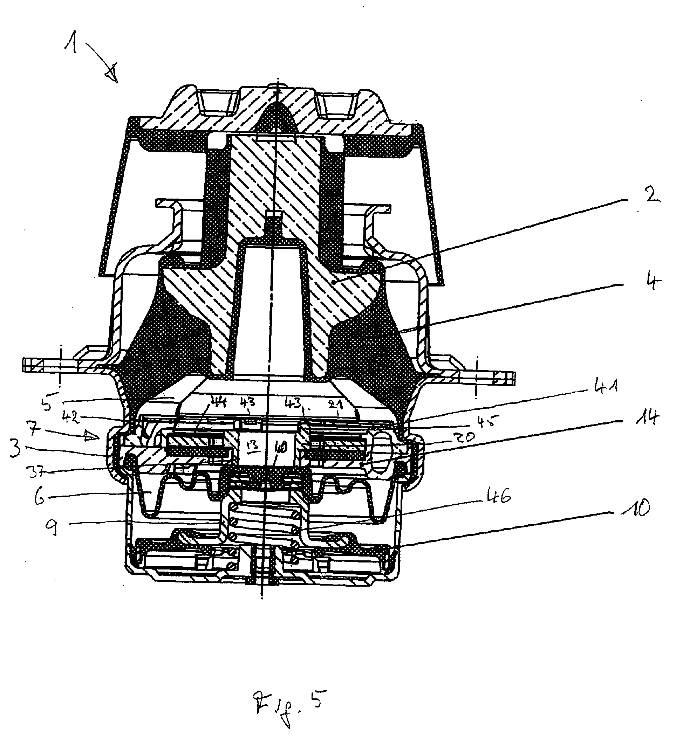

Die Figur 5 zeigt eine Ausbildung des schaltbaren Gummilagers 1, das für höhere Lasten verwendet werden kann. Der prinzipielle Aufbau des Lagers 1 entspricht dem in der Figur 1 beschriebenen. Der Tragköper 2 ist über den Federkörper 4 mit dem Auflager 3 verbunden. Der Arbeitsraum 5 ist vom Ausgleichsraum 6 durch die Trennwand 7 getrennt. In der Trennwand ist eine zentrale Durchtrittsöffnung 13, die durch den Kolben 9 in Verbindung mit dem mittigen Teil 40 der Rollmembran 8 verschlossen werden kann. Dabei schiebt der Kolben 9 das Klemmelement 15 über den Stutzen 37 nach oben. Abweichend vom Ausführungsbeispiel nach Figur 1 ist das Lager 1 hier mit einer Klemmfeder 41 aus Federblech ausgestattet. Diese Klemmfeder 41 wird durch einen Ring 42 gebildet, der nach innen gerichtete zungenartige Ausleger 21 hat. Mit ihren Zungenenden 43 liegen die Ausleger 21 in Ausnehmungen an dem Innenrand 20 des Klemmelements 15 auf. Der Innenrand 20 ist dabei mit nach oben über die Oberseite 44 des Klemmelements 15 hervorstehende Stützlappen 45 mit den Ausnehmungen versehen. Der Ring 42 der Klemmfeder 41 ist auf die Oberseite des Steckrings 22 aufgelegt und in einer Ringnut verstemmt. Der Außenrand des Steckrings 22 ist zusätzlich mit einer Rastnase versehen, welcher den Ring 42 zusätzlich in seiner Lage hält. Außerdem ist das Lager 1 mit einer Stellfeder 46 ausgestattet, die in das Innere des Kolbens 9 eingesetzt ist und zusätzlich zur Elastomerfeder 10 den Kolben 9 in seine Schließstellung drückt. Die Stellfeder 46 drück den Kolben 9 und damit auch das Klemmelement 15 nach oben und gibt damit die Membran 16 frei. Eine Tilgung bei geringen Amplituden findet statt. Sobald Unterdruck am Anschuss 12 angelegt wird, wird der Kolben 9 entgegen der Federkraft der Feder 46 nach unten gezogen und die Durchtrittsöffnung 13 wird freigegeben. Außerdem wird durch die Klemmfeder 41 das Klemmelement 15 nach unten auf die Membran 16 gedrückt und hält diese fest. Der Aufbau des Lagers 1 mit Klemmfeder 41 aus Stahlblech und mit der Stellfeder 46 ist für höhere Anpressdrücke am Klemmelement 15 und höhere Schließkräfte am Kolben 9 vorgesehen. Insgesamt kann mit der Erfindung eine gezielte Absenkung der dynamischen Federrate bei einer bestimmten Frequenz erreicht werden.

## Patentansprüche

1. Trennwand für ein umschaltbares, hydraulisch dämpfendes Gummilager mit einem elastomeren Federkörper und zwei Räumen für die Druckflüssigkeit, einem Arbeitsraum und einem Ausgleichsraum, wobei die beiden Räume durch die Trennwand getrennt sind, welche eine Düsenscheibe und eine von einem scheibenartigen mit Durchlässen versehenem Klemmelement überdeckte und auf der Düsenscheibe aufliegende Membran aufweist, wobei die Räume über eine von einem Stellglied verschließbare Durchtrittsöffnung sowie einen Dämpfungskanal hydraulisch miteinander kommunizieren, **dadurch gekennzeichnet, dass** das Klemmelement (15) an seinem Außenrand (19) mit Spiel formschlüssig von der Düsenscheibe (14) gehalten und an seinem Innrand (20) von an einem auf einen Außenring (23) der Düsenscheibe (14) aufsteckbaren Steckring (22) vorhandenen Auslegern (21) in Richtung auf die Düsenscheibe (14) gedrückt ist.

2. Trennwand nach Anspruch 1, **dadurch gekennzeichnet, dass** die Düsenscheibe (14) an ihrem Außenrand (26) radial nach innen weisenden Haken (24) hat, die mit Spiel den Außenrand (19) des Klemmelements (15) ergreifen.

3. Trennwand nach einem der Ansprüche 1 oder 2, **dadurch gekennzeichnet, dass** das Klemmelement (15) an seinem Außenrand (19) Einbuchtungen (25) als Durchlässe für die Haken (24) hat.

4. Trennwand nach einem der Ansprüche 1 bis 3, **dadurch gekennzeichnet, dass** der Steckring (22) mit mehreren nach innen gerichteten, federnd ausgebildeten Auslegern (21) versehen ist, die mit vorstehenden Nasen (27) an dem Innenrand (20) des Klemmelements (15) anliegen.

5. Trennwand nach Anspruch 4, **dadurch gekennzeichnet, dass** die Ausleger (21) zangenartig ausgebildet von einem Ring (42) sind, wobei der Ring (42) auf die Oberseite des Steckrings (22) aufgelegt und dort formschlüssig und/oder kraftschlüssig gehalten ist.

6. Trennwand nach Anspruch 5, **dadurch gekennzeichnet, dass** das Klemmelement (15) an seinem Innenrand (20) nach oben vorstehende Stützlappen (45) hat, auf denen die Zangenspitzen (43) aufliegen.

7. Trennwand nach einem der Ansprüche 1 bis 6, **dadurch gekennzeichnet, dass** der Außenrand (26) der Düsenscheibe (14) und der Steckring (22) ringnutförmige Ausnehmungen (28,29) für den Dämpfungskanal (30) haben.

8. Trennwand nach einem der Ansprüche 1 bis 7, **dadurch gekennzeichnet, dass** der Steckring (22) aus einem Kunststoff hergestellt ist.

9. Trennwand nach einem der Ansprüche 1 bis 8, **dadurch gekennzeichnet, dass** der Steckring (22) auf seiner Außenseite einen umlaufenden Flansch (35) hat, der von einem Kragen (36) der Düsenscheibe (14) umfasst ist.

10. Trennwand nach einem der Ansprüche 1 bis 9, **dadurch gekennzeichnet, dass** die Durchlässe (17, 18) des Klemmelements (15) und der Düsenscheibe (14) sich im Wesentlichen überdecken.

11. Trennwand nach einem der Ansprüche 1 bis 10, **dadurch gekennzeichnet, dass** das Klemmelement (15) mit einem mit Spiel in die Durchtrittsöffnung (13) der Trennwand (7) eingesetzten Stutzen (37) versehen ist.

12. Trennwand nach einem der Ansprüche 1 bis 9, **dadurch gekennzeichnet, dass** der Stutzen (37) geringfügig über die untere Fläche an der Durchtrittsöffnung (13) der Düsenscheibe (14) hervorsteht.

13. Trennwand nach einem der Ansprüche 1 bis 10, **dadurch gekennzeichnet, dass** das Klemmelement (15) aus einem Leichtmetall hergestellt ist.

14. Trennwand nach einem der Ansprüche 1 bis 13,**dadurch gekennzeichnet, dass** der Kolben (9) mit einer Stellfeder (46) versehen ist, welche den Kolben (9) in seine Schließstellung drückt.

## Claims

1. Partition for a switchable, hydraulically damping rubber mount having an elastomeric spring body and two spaces for the pressure fluid, a working space and a compensating space, wherein the two spaces are separated by the partition which has a nozzle disc and a diaphragm lying on the nozzle disc and covered by a disc-like clamping element provided with apertures, wherein the spaces communicate hydraulically with one another via a passage opening which can be closed by an actuator and via a damping channel, **characterized in that** the clamping element (15) is held positively with play at its outer edge (19) by the nozzle disc (14) and is pressed at its inner edge (20) in the direction of the nozzle disc (14) by brackets (21) which are present on a plug ring (22) which can be plugged onto an outer ring (23) of the nozzle disc (14).

2. Partition according to Claim 1, **characterized in that** the nozzle disc (14) has at its outer edge (26) radially inwardly directed hooks (24) which grip with play at the outer edge (19) of the clamping element (15).

3. Partition according to either of Claims 1 and 2, **characterized in that** the clamping element (15) has at its outer edge (19) indentations (25) as apertures for the hooks (24).

4. Partition according to one of Claims 1 to 3, **characterized in that** the plug ring (22) is provided with a plurality of inwardly directed, resiliently designed brackets (21) which bear with projecting lugs (27) against the inner edge (20) of the clamping element (15).

5. Partition according to Claim 4, **characterized in that** the brackets (21) are formed in the manner of tongs by a ring (42), wherein the ring (42) is placed on the upper side of the plug ring (22) and held there positively and/or non-positively.

6. Partition according to Claim 5, **characterized in that** the clamping element (15) has at its inner edge (20) upwardly projecting support tabs (45) on which the tongs tips (43) bear.

7. Partition according to one of Claims 1 to 6, **characterized in that** the outer edge (26) of the nozzle disc (14) and the plug ring (22) have annular groove-shaped cutouts (28, 29) for the damping channel (30).

8. Partition according to one of Claims 1 to 7, **characterized in that** the plug ring (22) is produced from a plastic.

9. Partition according to one of Claims 1 to 8, **characterized in that** the plug ring (22) has on its outer side a peripheral flange (35) which is enclosed by a collar (36) of the nozzle disc (14).

10. Partition according to one of Claims 1 to 9, **characterized in that** the apertures (17, 18) of the clamping element (15) and of the nozzle disc (14) substantially cover one another.

11. Partition according to one of Claims 1 to 10, **characterized in that** the clamping element (15) is provided with a stub (37) which is inserted with play into the passage opening (13) of the partition (7).

12. Partition according to one of Claims 1 to 9, **characterized in that** the stub (37) projects slightly beyond the lower surface on the passage opening (13) of the nozzle disc (14).

13. Partition according to one of Claims 1 to 10, **characterized in that** the clamping element (15) is produced from a light metal.

14. Partition according to one of Claims 1 to 13, **characterized in that** the piston (9) is provided with an actuating spring (46) which presses the piston (9) into its closed position.

## Revendications

1. Paroi de séparation pour un palier en caoutchouc commutable à amortissement hydraulique doté d'un corps de ressort en élastomère et de deux chambres pour le liquide sous pression, d'une chambre de travail et d'une chambre de compensation, les deux chambres étant séparées par la paroi de séparation pourvue d'un disque de gicleur et d'une membrane recouverte par un élément de serrage en forme de disque pourvu de passages et reposant sur le disque de gicleur, les chambres communiquant entre elles sur le plan hydraulique par le biais d'une ouverture de passage pouvant être fermée par un élément de réglage et d'un canal d'amortissement, **caractérisée en ce que** l'élément de serrage (15) est maintenu avec un certain jeu par complémentarité de formes avec le disque de gicleur (14) au niveau de son bord extérieur (19) et est comprimé au niveau de son bord intérieur (20) en direction du disque de gicleur (14) par des cantilevers (21) présents au niveau d'un anneau encastrable (22) encastré sur un anneau extérieur (23) du disque de gicleur (14).

2. Paroi de séparation selon la revendication 1, **caractérisée en ce que** le disque de gicleur (14) comporte, au niveau de son bord extérieur (26), des crochets (24) orientés vers l'intérieur dans le plan radial qui agrippent avec un certain jeu le bord extérieur (19) de l'élément de serrage (15).

3. Paroi de séparation selon l'une quelconque des revendications 1 ou 2, **caractérisée en ce que** l'élément de serrage (15) comporte, au niveau de son bord extérieur (19), des échancrures (25) prenant la forme de passages pour les crochets (24).

4. Paroi de séparation selon l'une quelconque des revendications 1 à 3, **caractérisée en ce que** l'anneau encastrable (22) est pourvu de plusieurs cantilevers (21) orientés vers l'intérieur réalisés comme des ressorts qui reposent, avec leurs becs (27) saillants, contre le bord intérieur (20) de l'élément de serrage (15).

5. Paroi de séparation selon la revendication 4, **caractérisée en ce que** les cantilevers (21) prennent la forme de languettes partant d'un anneau (42), l'anneau (42) reposant sur le côté supérieur de l'anneau encastrable (22) et y étant maintenu par complémentarité de formes et/ou par complémentarité de forces.

6. Paroi de séparation selon la revendication 5, **caractérisée en ce que** l'élément de serrage (15) comporte, au niveau de son bord intérieur (20), des pattes d'appui (45) saillant vers le haut sur lesquelles reposent les pointes (43) des languettes.

7. Paroi de séparation selon l'une quelconque des revendications 1 à 6, **caractérisée en ce que** le bord extérieur (26) du disque de gicleur (14) et l'anneau encastrable (22) comportent des évidements (28, 29) en forme de rainure annulaire pour le canal d'amortissement (30).

8. Paroi de séparation selon l'une quelconque des revendications 1 à 7, **caractérisée en ce que** l'anneau encastrable (22) est fabriqué en matière plastique.

9. Paroi de séparation selon l'une quelconque des revendications 1 à 8, **caractérisée en ce que** l'anneau encastrable (22) comporte, sur son côté extérieur, une bride périphérique (35) entourée d'un col (36) du disque de gicleur (14).

10. Paroi de séparation selon l'une quelconque des revendications 1 à 9, **caractérisée en ce que** les passages (17, 18) de l'élément de serrage (15) et du disque de gicleur (14) se recouvrent pour l'essentiel l'un l'autre.

11. Paroi de séparation selon l'une quelconque des revendications 1 à 10, **caractérisée en ce que** l'élément de serrage (15) est pourvu d'un raccord (37) pouvant être inséré avec un certain jeu dans l'ouverture de passage (13) de la paroi de séparation (7).

12. Paroi de séparation selon l'une quelconque des revendications 1 à 9, **caractérisée en ce que** le raccord (37) ressort légèrement au-dessus de la surface inférieure, au niveau de l'ouverture de passage (13) du disque de gicleur (14).

13. Paroi de séparation selon l'une quelconque des revendications 1 à 10, **caractérisée en ce que** l'élément de serrage (15) est fabriqué en métal léger.

14. Paroi de séparation selon l'une quelconque des revendications 1 à 13, **caractérisée en ce que** le piston (9) est pourvu d'un ressort de détente (46) qui comprime le piston (9) dans sa position fermée.
